# FASCICULE DE BREVET EUROPEEN

(11) **EP 3 675 545 B1**
(45) Date de publication et mention de la délivrance du brevet: **30.08.2023**
(21) Numéro de dépôt: 19220128.3
(22) Date de dépôt: 30.12.2019
(51) Int. Cl.: H04W 16/02

(54) **STATION DE BASE D'UNE STRUCTURE MOBILE D'UN SYSTÈME DE RADIOCOMMUNICATIONS MOBILES AVEC SYSTÈME ANTENNAIRE MULTI-SECTEURS**
BASISSTATION EINER MOBILEN STRUKTUR EINES MOBILEN FUNKKOMMUNIKATIONSSYSTEMS MIT MULTISEKTOR ANTENNENSYSTEM
BASE STATION OF A MOBILE STRUCTURE OF A MULTI-SECTOR ANTENNA SYSTEM MOBILE RADIO COMMUNICATION SYSTEM

(30) Priorité: 30.12.2018 FR 1874393
(43) Date de publication de la demande: 01.07.2020
(73) Titulaire: BULL SAS, 78340 Les Clayes-sous-Bois (FR)
(72) Inventeur: PISON, Laurent, 78760 Jouars Pontchartrain (FR)
(74) Mandataire: IPAZ

(56) Documents cités:
- EP-A1- 3 097 716
- US-A1- 2013 116 011

## Description

La présente invention concerne de manière générale les systèmes de radiocommunications avec les mobiles. En particulier, elle concerne une station de base d'une structure mobile d'un système de radiocommunications mobiles avec un système antennaire multi-secteurs.

### [Art antérieur]

Les réseaux de télécommunications avec les mobiles, comme les réseaux cellulaires selon la norme LTE (« *Long Term Evolution* ») définie par le consortium 3GPP et son évolution LTE-A (« Advanced LTE »), permettent d'établir des communications à haut débit entre des terminaux mobiles, avec une faible latence et une tolérance élevée aux déplacements relatifs des différentes entités mobiles qui forment le réseau. L'architecture de ces réseaux repose généralement sur un ensemble de stations de base, appelées eNodeB (de l'anglais « *evolved Node B* ») dans la norme LTE, qui sont des noeuds de réseau fixes formant la partie radio du réseau, appelée eUTRAN dans la norme LTE, et qui établissent des communications sans fil avec des terminaux mobiles, appelés UEs (de l'anglais « *User Equipements* ») dans la norme LTE, via une interface radio spécifique, appelée interface Uu dans la norme LTE. La partie radio d'un réseau LTE se compose des eNodeB, d'antennes locales ou distantes, de liaisons par fibres optiques vers les antennes distantes (liens par exemple de type CPRI pour « Common Protocol Radio interface ») et des liaisons IP (« Internet Protocol ») reliant les eNodeB entre eux (interface X2) et avec le coeur de réseau (interface S1) via un réseau de backhaul.

La norme LTE est compatible avec le concept de cellule mobile, suivant lequel une station de base peut elle-même être mobile, comme étant installée dans une structure mobile (par exemple un véhicule de pompiers, ou un véhicule de type « command-car » des forces de sécurité, par exemple), afin de pouvoir projeter en tout lieu d'un territoire une cellule LTE capable de servir un groupe de terminaux mobiles LTE utilisés par les agents des forces de police, des pompiers, etc.

Un cas d'usage typique dans lequel les stations de base sont mobiles est celui du domaine naval. Dans ce domaine, les structures mobiles sont par exemple des navires qui sont eux-mêmes équipés d'au moins une station de base et d'au moins un terminal de communication mobile. La station de base sert de noeud de réseau embarqué, et permet les échanges de données entre le coeur du réseau et les terminaux mobiles qui sont sous sa couverture radio.

La zone géographique ainsi desservie par la station de base couvre les espaces à bord du navire, et une certaine zone autour du navire également.

Dans une telle configuration, du fait, entres-autres, de la mobilité des stations de base, il peut arriver que le lien entre une station de base et le coeur du réseau soit perdu ou non fonctionnel. Par exemple, les navires peuvent naviguer à des distances potentiellement très grandes de tout autre noeud fixe du réseau qui par nature est à terre, sur une balise flottante ou dans un satellite. En conséquence, les liaisons pour l'échange de données sous protocole IP entre les stations de base embarquées et le coeur du réseau peuvent être dégradées voire perdues. En outre, ces liaisons peuvent aussi être perdues à la suite d'une catastrophe naturelle, comme un tremblement de terre ou un raz de marée, ayant pour conséquence immédiate la mise hors service des installations de communication à terre qui participent au réseau de backhaul et/ou au coeur de réseau.

Pour pallier ce type de défaillance du réseau de backhaul standard et/ou des équipements du coeur de réseau, une solution peut consister à utiliser des systèmes de communication permettant d'établir des liens de transmission de données de type backhaul directement entre les équipements radio de plusieurs structures mobiles différentes. De tels systèmes peuvent s'appuyer soit sur les équipements radio classiques d'une structure mobile (tels que sa station de base ou ses terminaux mobiles), soit sur des équipements d'utilisateur spécifiquement dédiés à l'établissement d'une telle liaison additionnellement intégrés à chaque structure mobile, ou soit encore sur une combinaison des deux.

De manière avantageuse, les liaisons de transport de données de type backhaul ainsi établies permettent de rendre les échanges de données entre structures mobiles autonomes par rapport au reste du réseau LTE standard. En outre, grâce à ces liaisons, il est possible de (re)créer un réseau de transport de données de type backhaul entre plusieurs structures mobiles. En particulier, lorsque les liaisons de transport de données de type backhaul relient entre elles plus de deux structures mobiles, il est possible de former un réseau maillé (i.e. dont la topologie est maillée) pour le transport des données par protocole IP.

Il est courant pour une station de base, qu'elle soit mobile ou non, de comporter un système antennaire avec plusieurs antennes d'émission/réception de signaux radiofréquence. Chacune, ou un groupe parmi l'ensemble des antennes de la station de base formant son système antennaire peut desservir une zone de couverture radio, appelée cellule, qui lui est propre. De plus, les antennes d'un tel système antennaire étant des antennes directives, leurs zones de couverture radio respectives sont des subdivisions de la zone de couverture radio totale de la station de base. Plus particulièrement, ces subdivisions sont des secteurs angulaires de la zone de couverture radio totale de la station de base. On parle alors de système antennaire multi-secteur, chaque secteur antennaire correspond à un secteur angulaire déterminé, et étant desservi par une antenne respective ou un groupe d'antennes respectif du système antennaire. Par souci de simplicité, on considérera dans la suite qu'à chaque secteur antennaire correspond une unique antenne du système antennaire, mais l'invention n'est pas limitée à cet exemple.

Chaque secteur antennaire utilisant des ressources radio propres, notamment une ou plusieurs bandes de fréquence propres à chacun des secteurs antennaires et/ou communes à un ou plusieurs autres secteurs antennaires, chacune desdites bandes de fréquence étant définie par une fréquence centrale et une largeur de bande, un secteur antennaire définit une cellule au sens radio.

De plus, lorsque l'établissement d'une liaison de transport de données de type backhaul est réalisé entre la station de base d'une structure mobile et un équipement utilisateur dédié d'une autre structure mobile (aussi appelé structure mobile tierce dans le présent exposé), ladite liaison se fait plus particulièrement entre l'équipement utilisateur dédié de la structure mobile tierce d'une part, et l'antenne du système antennaire de la station de base qui couvre le secteur angulaire précis dans lequel il se trouve, d'autre part.

En résumé, toute liaison de communications radio d'une station de base, c'est-à-dire aussi bien une liaison de communication cellulaire qu'une liaison de transport de données de type backhaul, implique des échanges de données entre l'entité (terminal de communication mobile ou équipement utilisateur dédié, respectivement) avec laquelle cette liaison est établie, d'une part, et une antenne unique du système antennaire de la station de base, d'autre part, laquelle est déterminée par la position angulaire relative de l'entité par rapport à la station de base.

Dans le cas où la station de base est mobile (i.e. dans le cas où elle appartient à une structure qui est elle-même est une structure mobile), la configuration spatiale des liaisons de communication radio de ladite station de base peut évoluer en fonction du temps, de manière parfois importante. En effet, la configuration spatiale des liaisons de communication radio d'une station de base découle directement de l'agencement de toutes les entités situées dans sa zone de couverture radio. Ainsi, lorsque la station mobile est en mouvement ou lorsque les entités avec lesquelles elle a établi des liaisons de communication radio sont en mouvement, la distribution des liaisons de communication radio entre les différentes antennes du système antennaire d'une station de base peut varier sensiblement. Par exemple, une entité peut entrer dans ou sortir d'un secteur angulaire de la zone de couverture radio de la station de base, en sortant de ou en entrant dans un autre secteur angulaire, respectivement. En outre, le nombre d'entités, dans un secteur angulaire déterminé, avec lesquelles la station de base est susceptible d'établir une liaison de communication radio peut augmenter ou diminuer au cours du temps, de manière parfois substantielle.

Or, le passage d'une entité, ayant une liaison de communication radio avec une station de base, de la zone de couverture radio d'une de ses antennes à la zone de couverture radio d'une autre de ses antennes, peut nécessiter des opérations complexes et consommatrices de ressources. Toutes les opérations qui permettent le passage d'une telle entité d'une cellule à une autre sans que la liaison de communication radio ne soit interrompue sont regroupées sous l'appellation *« handover*» (ou en français *« transfert intercellulaire* »). Ainsi, l'utilisation d'une station de base dans une structure mobile, peut impliquer des handover complexes et relativement fréquents du fait en particulier de la mobilité de la station de base.

En outre, au cours du *handover* d'une entité depuis l'une de ses cellules vers une autre de ses cellules, chaque station de base doit gérer l'attribution de ressources radio faite à cette liaison dans chaque cellule pour en assurer la continuité. Dit autrement, au sein du spectre de fréquence total utilisé par la station de base pour toutes ses liaisons de communication radio, l'entité de commande qui supervise la gestion des ressources radio et la réalisation des *handover* doit attribuer à chacune de ses liaisons, une ou plusieurs bandes de fréquence de ce spectre, qui permettent de conserver des capacités sensiblement identiques pour cette liaison, quel que soit le secteur angulaire dans lequel ladite liaison est effectivement établie à chaque instant.

En résumé, la mobilité d'une station de base avec un système antennaire multi-secteurs d'une structure mobile génère une complexité accrue dans la gestion des ressources radio pour tenir compte des besoins réels de toutes les liaisons de communication radio établies dans tous les différents secteurs angulaires de sa zone de couverture radio. Cette complexité peut être d'autant plus pénalisante que, quel que soit le type de liaison de communication radio concerné (liaison de communication cellulaire ou liaison de transport de données de type backhaul), la modification de leur configuration spatiale peut être fréquente.

Document D1 (US2013116011 A1) est une méthode d'attribution dynamique de bandes de fréquences aux secteurs d'un eNB, où, sur la base des conditions de trafic des secteurs individuels, l'eNB modifie la configuration de la bande de fréquences de l'antenne assignée à ces secteurs.

Document D2 (EP3097716A1) est une méthode de sectorisation d'une station de base dans laquelle la station de base recueille des mesures des UE sous sa couverture et, sur cette base, obtient une distribution spatiale des UE qui, à son tour, est utilisée pour ajuster l'angle d'inclinaison des antennes de la station de base afin d'obtenir des régions de couverture spatiale optimisées.

### [Problème technique]

L'invention a pour but de remédier aux inconvénients de l'art antérieur. En particulier, l'invention a pour but de proposer une station de base d'une structure mobile d'un système de radiocommunication mobile avec système antennaire multi-secteurs permettant de modifier, de façon dynamique, les ressources radio utilisées par les différentes antennes du système antennaire d'une station de base. Ainsi, la station de base peut s'adapter en temps réel aux changements de configuration spatiale de toutes ses liaisons de communication radio mais aussi des mouvements ou des évolutions des besoins en ressources radio.

L'invention a en outre pour but de proposer un procédé d'allocation dynamique de bandes de fréquence permettant de prendre en charge la complexité accrue dans la gestion des ressources radio pour tenir compte des besoins réels de toutes les liaisons de communication radio établies dans tous les différents secteurs angulaires de sa zone de couverture radio.

### [Brève description de l'invention]

A cet effet, un premier aspect de l'invention propose une station de base d'une structure mobile d'un système de radiocommunication mobile avec système antennaire multi-secteurs, ladite station de base comprenant :
- au moins une première antenne et une seconde antenne d'émission/réception de signaux radiofréquence, formant ledit système antennaire multi-secteurs, adaptées pour couvrir au moins un premier secteur angulaire et un second secteur angulaire, respectivement, dans lesquelles la station de base peut établir des liaisons de communication radio comprenant des liaisons de communication cellulaire avec des terminaux de communication mobiles de la structure mobile et/ou des liaisons de transport de données de type backhaul avec des équipements utilisateur dédiés d'au moins une autre structure mobile, situés dans le premier secteur angulaire ou dans le second secteur angulaire de ladite station de base, et,
- une entité de commande configurée pour modifier, de façon dynamique, au moins une bande de fréquence utilisée par au moins une antenne de la station de base en réponse à une modification de la configuration spatiale des liaisons de communication radio de ladite station de base.

L'invention permet ainsi de modifier, de façon dynamique, les ressources radio utilisées par les différentes antennes du système antennaire d'une station de base. Cette modification dynamique s'applique à la fois aux liaisons de communications cellulaire et aux liaisons de transport de données de type backhaul d'une station de base et permet à la station de base de s'adapter en temps réel aux changements de configuration spatiale de toutes ses liaisons de communication radio. En particulier, elle permet d'une part, de tenir compte des mouvements relatifs d'une station de base mobile par rapport aux entités avec lesquelles elle communique, et, d'autre part, de tenir compte des évolutions des besoins en ressources radio, de chaque secteur angulaire d'une station de base mobile.

L'homme du métier appréciera que l'invention est également applicable à une station mobile fixe, ayant un système antennaire multi-secteur ou encore à une station de base fixe, ayant un système antennaire multi-secteur.

### Selon d'autres caractéristiques optionnelles de la station de base :

- une modification de la configuration spatiale des liaisons de communication radio de la station de base comprend une modification de la distribution, entre les premier et second secteurs angulaires du système antennaire de ladite station de base, des terminaux de communication mobiles et/ou des équipements utilisateur dédiés de l'autre structure mobile avec lesquels la station de base a établi des liaisons de communications cellulaire et/ou des liaisons de transport de données de type backhaul, respectivement et/ou comprend une modification de la répartition entre les premier et second secteurs angulaires de la quantité des ressources radio requises pour les liaisons de communication radio de la station de base. De manière avantageuse, cela permet de gérer simultanément un maximum de terminaux de communication mobiles, ou équipements d'utilisateur. De façon plus préférée, une modification de la configuration spatiale des liaisons de communication radio de la station de base comprend une modification de la distribution, entre les premier et second secteurs angulaires du système antennaire de ladite station de base, des terminaux de communication mobiles et/ou des équipements utilisateur dédiés de l'autre structure mobile avec lesquels la station de base a établi des liaisons de transport de données de type backhaul.
- une modification d'une bande de fréquence utilisée par une antenne de la station de base est comprise parmi les modifications suivantes :
   ∘ l'addition d'une autre bande de fréquence ou la soustraction d'une sous-bande de fréquence ;
   ∘ la modification de la fréquence centrale de la bande de fréquence ou d'au moins une sous-bande de fréquence ; et
   ∘ la modification de la largeur spectrale de la bande de fréquence ou d'au moins une sous-bande de fréquence.
- l'entité de commande est en outre configurée pour modifier, de façon dynamique, au moins un paramètre d'identification associé à une antenne du système antennaire de la station de base, en réponse à une modification de la configuration spatiale des liaisons de communication radio de ladite station de base. En particulier, l'entité de commande est en outre configurée pour modifier, de façon dynamique, au moins un paramètre d'identification associé à une antenne du système antennaire de la station de base couvrant un secteur angulaire d'origine, en réponse à une modification de la configuration spatiale des liaisons de communication radio de ladite station de base, pour assurer une continuité avec le paramètre d'identification dudit secteur angulaire d'origine.
- un paramètre d'identification associé à une antenne d'un système antennaire d'une station de base est un paramètre du type Cell-ID ou PLMNid tels que définis selon la norme LTE.
- l'entité de commande est en outre configurée pour, en cas de transfert intercellulaire, ou *handover,* entre un premier secteur angulaire (207) et un second secteur angulaire (206) consécutif à un mouvement du système antennaire qui entraîne la modification de configuration spatiale, modifier la bande de fréquence utilisée par l'antenne couvrant le second secteur angulaire (206) pour que celle-ci soit identique à la bande de fréquence précédemment utilisée par l'antenne couvrant le premier secteur angulaire (207).
- un équipement utilisateur dédié d'une autre structure mobile est un terminal de liaison, comprenant des ressources matérielles et des ressources logicielles propres, adapté pour permettre l'établissement d'une liaison de transport de données de type backhaul entre la station de base et une station de base de ladite autre structure mobile
- un équipement utilisateur dédié d'une autre structure mobile est un terminal virtuel comprenant des ressources logicielles mise en oeuvre dans une station de base de ladite autre structure mobile, ainsi que des ressources matérielles de ladite station de base de l'autre structure mobile, adapté pour permettre l'établissement d'une liaison de transport de données de type backhaul entre la station de base et ladite station de base de l'autre structure mobile.
- la ou les bande(s) de fréquence utilisée(s) par les antennes d'émission/réception du système antennaire de la station de base, sont comprises dans un spectre de fréquence normalisé du système de radiocommunication mobile, par exemple un spectre de fréquence normalisé selon la norme LTE du consortium 3GPP.
- une modification de la distribution, entre les premier et second secteurs angulaires du système antennaire de ladite station de base, des terminaux de communication mobiles et des équipements utilisateur dédiés de l'autre structure mobile avec lesquels ledit système antennaire a établi des liaisons de communications cellulaire ou des liaisons de transport de données de type backhaul, comprend une rotation sur lui-même ou un virement de bord du navire ou un déplacement, du premier secteur angulaire au second secteur angulaire de la station de base, ou inversement, d'un équipement utilisateur dédié d'un navire avec lequel le système antennaire a établi une liaison de transport de données de type backhaul.
- la station de base est une station de base améliorée qui comprend en outre un coeur de réseau ePC local pour un système de radiocommunication mobile selon les technologies LTE.

Selon un autre aspect, l'invention porte sur un procédé d'allocation dynamique de bandes de fréquence, ledit procédé comprenant les étapes suivantes, exécutées par une entité de commande d'une station de base selon l'invention :
- réception d'une information indiquant une modification de la configuration spatiale des liaisons de communications radio de la station de base ; et,
- modification, sur la base de l'information reçue, d'au moins une bande de fréquence utilisée par au moins une antenne de la station de base.

### Selon d'autres caractéristiques optionnelles du procédé :

- l'entité de commande modifie, de façon dynamique, au moins un paramètre d'identification associé à une antenne du système antennaire de la station de base couvrant un secteur angulaire d'origine, en réponse à une modification de la configuration spatiale des liaisons de communication radio de ladite station de base, pour assurer une continuité avec le paramètre d'identification dudit secteur angulaire d'origine.
- Il comporte une étape d'établissement d'une liaison de transport de données de type backhaul entre la station de base et une station de base d'une autre structure mobile par l'intermédiaire d'un équipement utilisateur dédié de ladite autre structure mobile comprenant des ressources matérielles et des ressources logicielles propres.
- Il comporte une étape d'établissement d'une liaison de transport de données de type backhaul entre la station de base et une station de base d'une autre structure mobile par l'intermédiaire d'un un terminal virtuel comprenant des ressources logicielles mise en oeuvre dans une station de base de ladite autre structure mobile.

D'autres avantages et caractéristiques de l'invention apparaitront à la lecture de la description suivante donnée à titre d'exemple illustratif et non limitatif, en référence aux figures des dessins annexés dans lesquels :
**[****Fig. 1****]** est un schéma fonctionnel illustrant un mode de réalisation d'une station de base selon l'invention ;
**[****Fig. 2A****]** est un schéma fonctionnel illustrant un exemple de modification de la configuration spatiale des liaisons de communication radio d'une station de base selon l'invention ;
**[****Fig. 2B****]** est un schéma fonctionnel illustrant une modification des bandes de fréquences utilisées par les antennes du système antennaire d'une station de base selon l'invention ; et,
**[****Fig. 3****]** est un diagramme d'étapes d'un mode de mise en oeuvre du procédé selon l'invention.

### [Description de l'invention!

Dans la description qui suit, les termes « structure mobile » désignent une entité qui comprend des moyens de communications cellulaire avec des terminaux d'utilisateur appartenant à la structure mobile. La structure est mobile, c'est-à-dire qu'elle peut être en mouvement, stationnaire (i.e., immobile) ou nomade (i.e., alternant des phases de mobilité et des phases stationnaires). Les structures mobiles peuvent correspondre, plus généralement, à toute infrastructure fixe terrestre et/ou navale, c'est-à-dire ne disposant pas de moyens matériels adaptés pour se mouvoir, ou encore à toute structure mobile terrestre et/ou navale disposant de moyens adaptés pour se mettre en mouvement, stationnaire (i.e., immobile) ou nomade (i.e., alternant des phases de mobilité et des phases stationnaires). En particulier, les structures mobiles sont des véhicules d'une flotte de véhicules. Avantageusement, les structures mobiles selon l'invention ne sont pas connectées par des liaisons filaires.

Le terme « réseau de backhaul », ou « backhaul », est utilisé dans les réseaux de téléphonie mobile comme LTE pour désigner le réseau et les liens de transport de données entre le coeur de réseau et les antennes relais de la partie radio du réseau de téléphonie mobile. C'est un réseau intermédiaire qui permet l'émission et la réception de données entre les stations de base qui font office d'équipements de raccordement d'abonnés (i.e., d'utilisateurs mobiles), d'une part, et le coeur de réseau, d'autre part. De manière générale, la création d'un tel réseau peut permettre l'établissement de liaisons de communication entre les différents noeuds d'une infrastructure de façon à permettre une communication entre les applications desdits noeuds au travers de services IP dédiés. Ces échanges sont réalisés sous le protocole IP *(« Internet Protocol* »). Contrairement à la présente invention, dans les réseaux de télécommunication fixes ou mobiles, un réseau de backhaul classique utilise largement la fibre optique pour le transport des données.

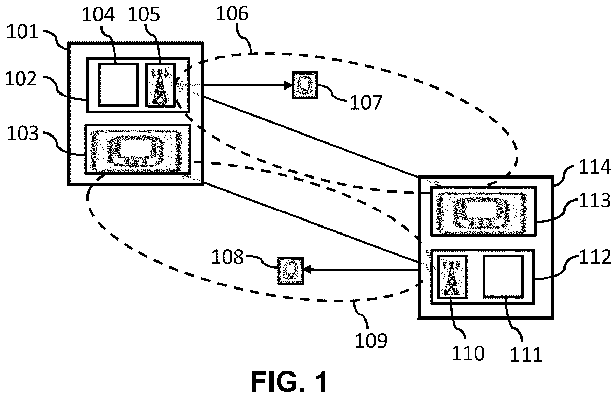

En référence au schéma de la **figure** 1, il va tout d'abord être décrit un mode de réalisation d'une station de base d'une structure mobile d'un système de radiocommunications mobiles avec système antennaire multi-secteurs selon l'invention.

Typiquement, le système antennaire d'une station de base d'un réseau de télécommunications mobiles est défini sur un plan horizontal et se compose de n antennes avec n pouvant par exemple être égale à 2, 3 ou 4, couvrant chacune un secteur angulaire de 360/n°. La zone de couverture radio d'une telle station de base s'étend donc dans toutes les directions (i.e. à 360°) autour de cette station de base avec quatre portions d'ouvertures angulaires égales, de la zone de couverture radio totale, couvertes par quatre antennes différentes, respectivement. En conséquence, les terminaux de communications mobiles, situés dans la zone de couverture radio d'une station de base, établissent une liaison de communication cellulaire spécifiquement avec l'antenne du système antennaire qui couvre le secteur angulaire précis dans lequel ils se trouvent. Cependant, l'invention peut également s'appliquer dans le cadre d'un système antennaire défini en 3 dimensions (3D). En particulier, l'invention peut s'appliquer à des antennes virtuelles positionnées pour gérer des secteurs en 3D.

Dans l'exemple représenté à la figure 1, deux structures mobiles 101 et 114 sont chacune équipée de stations de bases 102 et 112 et d'équipements d'utilisateur dédiés 103 et 113, respectivement. Cet exemple n'est toutefois pas limitatif, et l'homme du métier appréciera que l'invention peut s'appliquer à un nombre de structures mobiles supérieur ou égal à deux, ayant chacun plus d'une station de base et/ou plus d'un équipements d'utilisateur dédié.

De façon similaire à ce qui a été décrit en introduction, les équipements d'utilisateur dédiés 103 et 113 sont des entités spécifiquement configurées pour permettre d'établir des liaisons de transport de données de type backhaul avec la station de base d'une autre structure mobile. Ces entités peuvent être, par exemple, des entités virtualisées qui utilisent des ressources physiques d'une eNodeB, c'est-à-dire des terminaux virtuels qui comprennent des ressources logicielles mise en oeuvre dans une station de base à laquelle ils sont associés, ainsi que des ressources matérielles de ladite station de base. Dans un autre exemple, il peut s'agir d'un terminal d'un type spécifique, dit terminal de liaison, qui comprend des ressources matérielles et des ressources logicielles propres.

Les stations de base 102 et 112 sont par exemple les entités appelées eNodeB (de l'anglais « evolved Node B ») telles qu'elles sont couramment utilisées dans les réseaux de radiocommunications mobiles basés sur les normes LTE du consortium 3GPP. De façon connue en soi par l'homme du métier, et conformément aux normes LTE, elles constituent la passerelle entre le coeur du réseau LTE de transport de données par protocole IP, d'une part, et des terminaux de communication mobiles, ou équipements d'utilisateur UE (de l'anglais « User Equipment ») 107 et 108 d'autre part.

En particulier, les eNodeB 102 et 112 comprennent des antennes d'émission/réception de signaux radiofréquence 105 et 110. Chaque station de base comprend en pratique au moins deux antennes d'émission/réception de signaux radiofréquence, qui forment son système antennaire multi-secteur. L'invention n'entend toutefois pas être limitée par le nombre d'antennes, ni le nombre de secteurs, du système antennaire de chaque station de base selon l'invention.

Dans l'exemple considéré ici, chacune des antennes du système antennaire de chaque station de base dessert une zone de couverture radio, aussi appelée cellule, qui lui est propre. En l'espèce, l'antenne 105 du système antennaire de la station de base 102 dessert la cellule 106 et l'antenne 110 de la station de base 112 dessert la cellule 109. Au sein de chaque cellule couverte par l'une des antennes de son système antennaire, la station de base peut établir, d'une part, des liaisons de communication cellulaire avec des terminaux de communication mobiles et, d'autre part, des liaisons de transport de données de type backhaul avec un équipement d'utilisateur dédié d'une autre structure mobile, ou structure mobile tierce. Dans l'exemple représenté à la figure 1, l'antenne 105 de la station de base 102 a établi une liaison de communication cellulaire avec le terminal de communication mobile 107 de la structure mobile 101 et une liaison de transport de données de type backhaul avec l'équipement utilisateur dédié 113 de l'autre structure mobile 114. De plus, l'antenne 110 de la station de base 112 a établi une liaison de communication cellulaire avec le terminal de communication mobile 108 de la structure mobile 114 et une liaison de transport de données de type backhaul avec l'équipement utilisateur dédié 103 de l'autre structure mobile 101. L'homme du métier appréciera à nouveau que cet exemple n'est pas limitatif et que le nombre d'entités, situées dans sa cellule, avec lequel une antenne d'une station de base peut établir une liaison de communication cellulaire ou une liaison de transport de données de type backhaul n'est pas limité à l'unité et peut varier dans le temps. En outre, les eNodeB 102 et 112 utilisent typiquement des interfaces radio, telles que l'interface radio LTE-Uu couramment utilisée dans les réseaux de radiocommunication mobile basés sur les normes LTE, pour établir leurs liaisons de communication radio avec l'ensemble des entités qui sont présentes dans les cellules qu'elles desservent.

Enfin, outre les antennes de son système antennaire, chaque station de base comprend une entité de commande. Chaque entité de commande gère et pilote l'utilisation des ressources radio faites par la station de base à laquelle elle appartient. Ainsi, dans l'exemple représenté à la figure 1, les entités de commande 104 et 111 des structures mobiles 101 et 114, respectivement, gèrent et pilotent l'utilisation des ressources radios faites par les stations de base 102 et 112, respectivement. Comme nous allons le voir plus en détail dans la partie de la description qui suit, dans les différents modes de réalisation d'une station de base selon l'invention, ces entités de commande sont configurées pour modifier, de façon dynamique, les bandes de fréquence utilisées par les antennes d'une station de base. Plus précisément, les bandes de fréquence utilisées pour toutes les liaisons de communication radio (i.e. pour les liaisons de communications cellulaire et pour les liaisons de transport de données de type backhaul) d'une station de base peuvent être modifiées par chaque entité de commande 104 et 111 en réponse à un changement de la configuration spatiale de ces liaisons. Avantageusement, en variante ou en complément, chaque entité de commande peut être relié à une ou plusieurs entités de commande tierces, permettant ainsi de générer des « modèles » de gestion et de pilotage des ressources radio entre toutes les stations de base afin d'optimiser les liaisons de communication radio. En effet, une coordination entre les structures mobiles peut donc s'avérer nécessaire, typiquement on peut avoir des noeuds (e.g. eNodeB et entité de commande) maitres et d'autre esclaves. Dans un exemple de réalisation, les noeuds maîtres changent leur fréquence sur l'antenne, les esclaves n'ont que des UE 'asservis' et connectes sur le PLMNid et le cell id (par exemple).

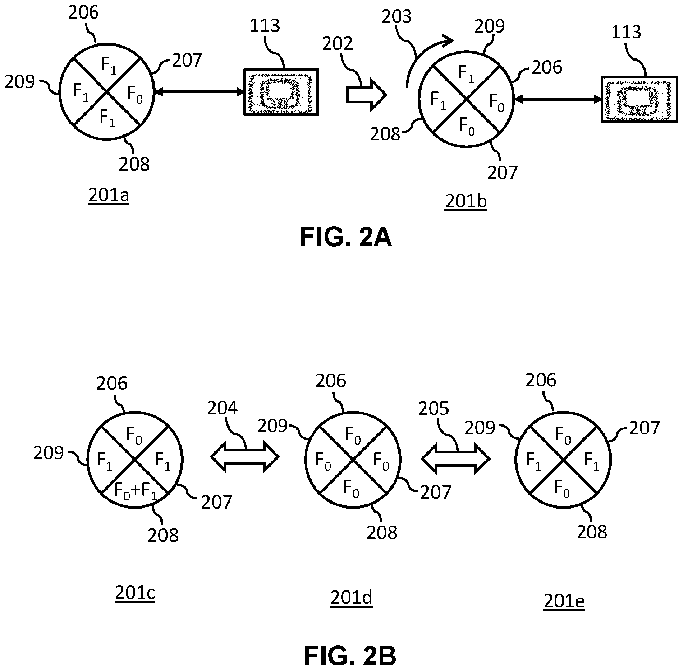

En référence à la **figure 2A** nous allons maintenant décrire un exemple de changement de la configuration spatiale des liaisons de communication radio d'une station de base. La figure 2A montre plus particulièrement le système antennaire 201 de la station de base 102 de la structure mobile 101 (non-représentées à la figure 2A). Ce système antennaire est composé de quatre antennes d'émission/réception de signaux radiofréquence, qui desservent chacun un secteur angulaire 206, 207, 208 et 209, respectivement. Dans chacun de ces secteurs angulaires, ou cellule, la station de base 102 peut établir des liaisons de communication cellulaire et/ou des liaisons de transport de données de type backhaul. Ces quatre secteurs angulaires distincts forment ensemble la zone de couverture radio de la station de base 102.

Les parties respectivement situées à gauche et à droite de la flèche 202 représenté à la figure 2A représentent chacune deux configurations spatiales distinctes des liaisons de communication radio de la station de base 102. En outre, la flèche 202 symbolise une évolution dans le temps de cette configuration spatiale, et la flèche 203 symbolise un mouvement du système antennaire dans son ensemble qui entraîne le changement de configuration spatiale en question. En l'espèce, il s'agit d'une rotation dans le sens horaire.

Dans la première configuration spatiale illustrée dans la partie gauche de la figure 2A, une liaison de transport de données de type backhaul est établie entre l'antenne qui correspond au secteur angulaire 207 du système antennaire 201a et l'équipement utilisateur dédié 113 de la structure mobile 114. Dans l'exemple représenté, cette liaison de transport de données de type backhaul peut être établie dans une bande de fréquence centrée sur une fréquence déterminée F₀ et ayant une largeur spectrale (ou largeur de bande) déterminée ΔF₀. En outre, de manière générale, chaque liaison de communication radio établie par une antenne du système antennaire peut utiliser une ou plusieurs bandes de fréquence d'un spectre de fréquence utilisé par la station de base pour toutes ses communications radio. Par exemple, elle peut utiliser différentes bandes de fréquence d'un spectre de fréquence selon la norme LTE du consortium 3GPP.

Dans la seconde configuration spatiale illustrée dans la partie droite de la figure 2A, à la suite de la rotation du système antennaire dans le sens horaire, la liaison de transport de données de type backhaul est cette fois établie entre l'antenne qui correspond au secteur angulaire 206 du système antennaire 201b, et l'équipement utilisateur dédié 113 de la structure mobile 114.

La station de base selon des modes de réalisation de l'invention est en effet adaptée pour réaliser une modification des bandes de fréquences utilisées par les antennes de la station de base en réponse à la modification de la configuration spatiale de ses liaisons de communication radio. En l'espèce, l'entité de commande 104 de la station de base 102 modifie alors la bande de fréquence utilisée par l'antenne du secteur angulaire 206 du système antennaire 201b pour que celle-ci soit identique à la bande de fréquence précédemment utilisée par l'antenne du secteur angulaire 207 du système antennaire. Dit autrement, en réponse à la rotation du système antennaire, l'entité de commande impose à l'antenne du secteur 206 d'utiliser la même bande de fréquence que l'antenne du secteur 207 afin qu'aucun changement ne soit perçu par l'équipement utilisateur dédié 113. Ceci permet de faciliter une procédure de *handover* entre la cellule 207 et la cellule 206, voire de l'éviter, dans certains modes de réalisation sur lesquels on reviendra plus loin. En particulier, dans l'exemple représenté à la figure 2A, l'antenne du secteur angulaire 206 du système antennaire 201b utilise la bande de fréquence centrée sur F₀ et ayant une largeur spectrale ΔF₀ dès que la liaison de communication radio concernée passe du secteur angulaire 207 au secteur angulaire 206.

De manière générale, une telle modification des bandes de fréquence utilisées par les antennes du système antennaire d'une station de base peut être opérée en réponse à tout type de modification de l'orientation du système antennaire de la station de base relativement à une entité quelconque comprise parmi les terminaux de communication mobiles et les équipements utilisateur dédiés, avec laquelle le système antennaire a établi une liaison de communication cellulaire ou une liaison de transport de données de type backhaul. Dit autrement, dès lors que l'entité se déplace par rapport à la station de base ou dès lors que la station de base se déplace ou modifie son orientation par rapport à l'entité d'une manière entraînant le passage de ladite entité d'un secteur à un autre, l'entité de commande de la station de base modifie l'allocation de ses ressources radio pour que ce changement soit transparent du point de vue de l'entité en question.

En outre, dans un mode de réalisation particulier, les structures mobiles 101 et 114 peuvent être des navires d'une flottille de navires équipés chacun d'une station de base avec un système antennaire multi-secteurs. Dans ce cas, une modification de l'orientation du système antennaire de la station de base relativement à l'équipement utilisateur dédié 113 de la structure mobile 114 peut résulter d'une rotation du navire 101 sur lui-même, un virement de bord du navire 101 ou un déplacement du navire 114 dans la zone de couverture radio de la station de base 102 du navire 101.

En référence à la **figure 2B** nous allons maintenant décrire un exemple de modification de la configuration de bandes de fréquences utilisées par les antennes du système antennaire d'une station de base. Dans cet exemple, l'entité de commande de la station de base 102 modifie l'attribution de ses ressources radio (i.e. des bandes de fréquence du spectre de fréquence) faite aux quatre antennes du système antennaire 201 de ladite station de base 102. Trois configurations distinctes sont représentées, dans cet exemple, à savoir les configurations 201c, 201d et 201e, respectivement. L'homme du métier appréciera que l'invention n'est évidemment pas limitée à ces exemples de configurations. Les double-flèches 204 et 205 symbolisent les modifications d'une configuration à l'autre, qui peuvent être opérées de manière réversible dans un sens ou dans l'autre. En outre, dans l'exemple non-limitatif représenté, chaque secteur angulaire (donc chaque antenne) utilise soit la bande de fréquence centrée sur la fréquence F₀ et ayant une largeur spectrale ΔF₀, soit la bande de fréquence centrée sur la fréquence F₁ et ayant une largeur spectrale ΔF₁, soit ces deux bandes de fréquences en même temps.

Par exemple, l'antenne du secteur angulaire 208 représenté en bas de la figure, dans la configuration du système antennaire 201c, utilise les deux bandes de fréquences centrées sur F₀ et sur F₁, respectivement. Cette configuration peut, par exemple, répondre à la présence d'un grand nombre d'entités desservies dans ce secteur angulaire 208 du système antennaire. De plus, les antennes des secteurs angulaires 207 et 209 représentés sur les côtés, dans les trois configurations du système antennaire 201c, 201d et 201e utilisent alternativement la bande de fréquence centrée sur la fréquence F₀ et celle la bande de fréquence centrée sur la fréquence F₁. En outre, les largeurs spectrales ΔF₀ et ΔF₁ de ces deux bandes diffèrent. De ce fait, chaque modification d'une bande de fréquence utilisée par une antenne pour ses liaisons de communication radio implique une modification des capacités de cette liaison de communication radio (en particulier de la bande passante utilisable par cette liaison). Ces changements peuvent par exemple être opérés en réponse à un besoin de débit temporairement plus important pour les liaisons de communications radio établies dans ces secteurs. Finalement, les trois configurations du système antennaire 201c, 201d et 201e correspondent chacune à une répartition spécifique des ressources radio totale de la station de base 102.

D'une manière générale, une modification des bandes de fréquences utilisées par les antennes du système antennaire d'une station de base peut être opérée en réponse à toute modification des ressources radio requises par une liaison de communication cellulaire ou par une liaison de transport de données de type backhaul. Par exemple, chaque fois qu'une entité, avec laquelle une liaison de communication radio peut être établie, s'ajoute dans un secteur antennaire donné ou chaque fois qu'une telle entité sollicite un débit plus important (et donc une consommation de ressources radio plus importante) pour sa liaison, l'entité de commande de la station de base modifie, de façon dynamique, l'allocation des ressources radio faite à l'antenne qui correspond à ce secteur antennaire donné.

En outre, pour répondre aux besoins réels d'un secteur antennaire en termes de ressources radio, une modification des bandes de fréquences utilisées par les antennes du système antennaire d'une station de base peut correspondre à l'addition ou la soustraction d'une bande de fréquence utilisée par une antenne, à la modification de la fréquence centrale d'au moins une bande de fréquence utilisée par une antenne ou encore à la modification de la largeur spectrale d'au moins une bande de fréquence utilisée par une antenne.

Avantageusement, toutes les modifications de bandes de fréquence opérées par l'entité de commande d'une station de base, qu'elles répondent à un déplacement du système antennaire ou à une évolution des besoins associés aux différents secteurs angulaire de ce système antennaire, permettent à la fois d'optimiser la gestion de ressources radio d'une station de base et de réduire la complexité de la procédure de *handover* lors du passage d'une liaison de communication radio d'une cellule de la station de base à une autre cellule de la station de base. Ainsi, lorsque la procédure de *handover* se produit, la continuité de la liaison de communication radio entre l'entité et la station de base est facilitée par la continuité de la bande de fréquence dans laquelle la liaison est établie. On évite ainsi, en effet, les sauts de fréquence de la chaîne d'émission/réception radio des terminaux mobiles et des terminaux d'utilisateur dédiés.

Additionnellement, dans un mode de réalisation particulier, l'entité de commande peut aussi modifier des paramètres d'identification associés à une antenne du système antennaire d'une station de base, en réponse à une modification de la configuration spatiale des communications radio de ladite station de base. Par exemple, l'entité de commande peut modifier des paramètres du type Cell-ID ou PLMNid (de l'anglais *« Public Land Mobile Network* »)*.* Ces paramètres sont des nombres spécifiques qui sont associés à une cellule déterminée ou à une entité capable d'établir des liaisons de communication radio et qui permettent leur identification. Avantageusement, leur modification permet aussi de réduire la complexité de la procédure de *handover,* voire de rendre une telle procédure inutile en assurant une continuité de l'identité de la cellule au sein de laquelle une entité donnée communique avec la station de base. Du point de vue des terminaux mobiles et des terminaux d'utilisateur dédiés présents dans le secteur antennaire d'origine, tout se passe comme si la configuration spatiale de leurs communications radio n'avait pas changé.

Enfin, dans un autre mode de réalisation particulier, chaque station de base comprend en outre, un coeur de réseau local comme par exemple un coeur de réseau appelé ePC (de l'anglais « *evolved Packet Core* ») dans les normes LTE. Ces ePC locaux intègrent toutes les fonctions connues liées au coeur d'un réseau mobile LTE. En particulier, ils intègrent des MMEs (de l'anglais « *Mobility Management Entity* »), des passerelles de service SGW (de l'anglais « Serving Gateway »), des passerelles de transport de données PGW (de l'anglais « *Packet Gateway* ») et une base de données de type HSS (de l'anglais « *Home Subscriber Server*») qui contient la plupart des informations utiles qui sont relatives aux utilisateurs du réseau comme, par exemple, la localisation d'un utilisateur et/ou son identification/authentification. Dans une telle configuration, la station de base est dite améliorée en ce sens qu'elle permet de gérer localement toutes les opérations nécessaires à l'établissement d'un réseau de transport de données tel qu'un réseau de transport de données de type bakchaul formé par plusieurs stations de base améliorées.

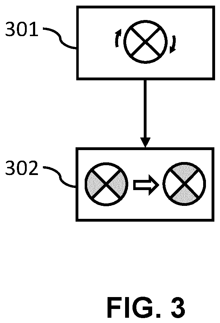

En référence à la **figure 3** nous allons maintenant décrire un diagramme d'étapes d'un mode de mise en oeuvre du procédé selon l'invention. Le procédé est exécuté par une entité de comme d'une station de base d'une structure mobile conforme à celle qui a été décrite en référence aux figures 1, 2A et 2B.

La première étape 301 du procédé consiste en la réception, d'une information indiquant une modification de la configuration spatiale des liaisons de communications radio de la station de base. Une telle information peut avoir été obtenue, par exemple, par un scanner radio permettant, d'une part, de localiser tous les équipements radio (terminaux de communication mobiles ou équipements utilisateurs dédiés) présents dans la zone de couverture radio d'une station de base et, d'autre part, de déterminer les ressources radio, et en particulier les bandes de fréquences, utilisées par les liaisons de communication radio établies avec ces équipements radio. De manière générale, une telle information peut être transmise à l'entité de commande par tout moyen permettant de réaliser ces opérations.

L'étape 302 consiste ensuite modifier, sur la base de l'information reçue, au moins une bande de fréquence utilisée par au moins une antenne de la station de base, pour une liaison de communications cellulaire ou pour une liaison de transport de données de type backhaul. Cette opération d'allocation de bandes de fréquences déterminées aux différentes antennes du système antennaire est adaptée pour optimiser les ressources allouées à chaque antenne en fonction des besoins réels des liaisons de son secteur et de la mobilité des entités qui communiquent entre elles.

En outre, afin que la gestion des terminaux de communication soit améliorée, la modification d'au moins une bande de fréquence utilisée par au moins une antenne de la station de base peut comporter des étapes de :
- blocage, par la station de base, d'un canal d'accès aléatoire de type PRACH (de l'anglais « Physical Random Access Channel »), afin d'empêcher provisoirement la réception de requêtes en allocation de ressources radio en provenance des terminaux de communication mobiles ayant une liaison de communication cellulaire avec ladite une antenne ;
- détachement des terminaux de communication mobiles ayant une liaison de communication cellulaire avec l'antenne, ;
- reconfiguration des ressources radio de l'antenne par la station de base ; et,
- déblocage du canal PRACH par la station de base, ce qui permet le ré-attachement naturel des terminaux de communication mobiles qui demandent et obtiennent l'établissement d'une nouvelle une liaison de communication cellulaire avec la station de base via l'antenne.

Concernant le blocage d'un canal d'accès aléatoire de type PRACH, celui-ci peut être exécuté de plusieurs façons. Le blocage peut par exemple comporter un arrêt de gestion des RACH en local sur la station de base. Cela conduirait à un rejet temporaire de toute demande. De façon préférée, il peut comporter le blocage de l'accès à la cellule signalée sur les informations système de la cellule, le temps d'effectuer la reconfiguration. Cette procédure peut être appelée « Barring Cell » en terminologie anglo-saxonne. Ainsi, aucun terminal ne peut alors tenter de joindre le PRACH. L'utilisation dans ce contexte particulier d'une telle procédure peut permettre de limiter la surcharge du système inutilement et augmente l'autonomie des terminaux.

En outre, avantageusement, dans le cadre d'un blocage de l'accès à la cellule, le procédé peut comporter une prise en compte des classes de terminaux. Les classes de terminaux se réfèrent en particulier aux AC (« Access class » en terminologie anglosaxonne) configurés dans la SIM de chaque terminal. Dans ce contexte, le procédé peut comporter, lors de l'étape de déblocage du canal PRACH, le déblocage que d'une partie des classes de terminaux de façon à faire par exemple un déblocage graduel et ainsi éviter de congestionner le système.

Avantageusement, le procédé est exécuté de manière continue et permet ainsi, à chacune de ses itérations, d'ajuster en temps réel, les ressources radio du système antennaire d'une station de base à la configuration spatiale de toutes ses liaisons de communication radio.

## Revendications

1. Station de base (102) pour une structure mobile (101) d'un système de radiocommunication mobile avec système antennaire multi-secteurs, ladite station de base comprenant :
- au moins une première antenne (105) et une seconde antenne d'émission/réception de signaux radiofréquence, formant ledit système antennaire multi-secteurs (201), adaptées pour couvrir au moins un premier secteur angulaire et un second secteur angulaire, respectivement, dans lesquelles la station de base peut établir des liaisons de communication radio comprenant des liaisons de communication cellulaire avec des terminaux de communication mobiles (107) de la structure mobile (101) et/ou des liaisons de transport de données de type backhaul avec des équipements utilisateur dédiés (113) d'au moins une autre structure mobile (114), situés dans le premier secteur angulaire ou dans le second secteur angulaire de ladite station de base, et,
- une entité de commande (104) configurée pour modifier, de façon dynamique, au moins une bande de fréquence utilisée par au moins une antenne de la station de base en réponse à une modification de la configuration spatiale des liaisons de communication radio de ladite station de base.

2. Station de base selon la revendication 1, dans laquelle la modification de la configuration spatiale des liaisons de communication radio de la station de base comprend une modification de la distribution, entre les premier et second secteurs angulaires du système antennaire de ladite station de base, des terminaux de communication mobiles et/ou des équipements utilisateur dédiés de l'autre structure mobile avec lesquels la station de base a établi des liaisons de communications cellulaire ou des liaisons de transport de données de type backhaul, respectivement, et/ou comprend une modification de la répartition entre les premier et second secteurs angulaires de la quantité des ressources radio requises pour les liaisons de communication radio de la station de base.

3. Station de base selon l'une quelconque des revendications précédentes, dans laquelle la modification d'une bande de fréquence utilisée par une antenne de la station de base est comprise parmi les modifications suivantes :
- l'addition d'une autre bande de fréquence ou la soustraction d'une sous-bande de fréquence ;
- la modification de la fréquence centrale de la bande de fréquence ou d'au moins une sous-bande de fréquence ; et,
- la modification de la largeur spectrale de la bande de fréquence ou d'au moins une sous-bande de fréquence.

4. Station de base selon l'une quelconque des revendications précédentes, dans laquelle l'entité de commande est en outre configurée pour modifier, de façon dynamique, au moins un paramètre d'identification associé à une antenne du système antennaire de la station de base, en réponse à la modification de la configuration spatiale des liaisons de communication radio de ladite station de base.

5. Station de base selon l'une quelconque des revendications 1 à 3, dans laquelle l'entité de commande est en outre configurée pour modifier, de façon dynamique, au moins un paramètre d'identification associé à une antenne du système antennaire de la station de base couvrant un secteur angulaire d'origine, en réponse à la modification de la configuration spatiale des liaisons de communication radio de ladite station de base, pour assurer une continuité avec le paramètre d'identification dudit secteur angulaire d'origine.

6. Station de base selon la revendication 4 ou 5, dans laquelle le paramètre d'identification associé à une antenne d'un système antennaire d'une station de base est un paramètre du type Cell-ID ou PLMNid tels que définis selon la norme LTE.

7. Station de base selon l'une quelconque des revendications précédentes, dans laquelle l'entité de commande est en outre configurée pour, en cas de transfert intercellulaire, ou *handover,* entre un premier secteur angulaire (207) et un second secteur angulaire (206) consécutif à un mouvement du système antennaire qui entraîne la modification de configuration spatiale, modifier la bande de fréquence utilisée par l'antenne couvrant le second secteur angulaire (206) pour que celle-ci soit identique à la bande de fréquence précédemment utilisée par l'antenne couvrant le premier secteur angulaire (207).

8. Station de base selon l'une quelconque des revendications précédentes, dans laquelle l'équipement utilisateur dédié d'une autre structure mobile est un terminal de liaison, comprenant des ressources matérielles et des ressources logicielles propres, adapté pour permettre l'établissement d'une liaison de transport de données de type backhaul entre la station de base et une station de base de ladite autre structure mobile.

9. Station de base selon l'une quelconque des revendications précédentes, dans laquelle l'équipement utilisateur dédié d'une autre structure mobile est un terminal virtuel comprenant des ressources logicielles mise en oeuvre dans une station de base de ladite autre structure mobile, ainsi que des ressources matérielles de ladite station de base de l'autre structure mobile, adapté pour permettre l'établissement d'une liaison de transport de données de type backhaul entre la station de base et ladite station de base de l'autre structure mobile.

10. Station de base selon l'une quelconque des revendications précédentes, dans laquelle la ou les bande(s) de fréquence utilisée(s) par les antennes d'émission/réception du système antennaire de la station de base, sont comprises dans un spectre de fréquence normalisé du système de radiocommunication mobile, par exemple un spectre de fréquence normalisé selon la norme LTE du consortium 3GPP.

11. Station de base selon l'une quelconque des revendications précédentes, dans laquelle la station de base est une station de base améliorée qui comprend en outre un coeur de réseau ePC local pour un système de radiocommunication mobile selon les technologies LTE.

12. Procédé d'allocation dynamique de bandes de fréquence, ledit procédé comprenant les étapes suivantes, exécutées par une entité de commande d'une station de base selon l'une quelconque des revendications précédentes :
- réception (301) d'une information indiquant une modification de la configuration spatiale des liaisons de communications radio de la station de base ; et,
- modification (302), sur la base de l'information reçue, d'au moins une bande de fréquence utilisée par au moins une antenne de la station de base.

13. Procédé d'allocation dynamique de bandes de fréquence selon la revendication 12 **caractérisé en ce que** l'entité de commande modifie, de façon dynamique, au moins un paramètre d'identification associé à une antenne du système antennaire de la station de base couvrant un secteur angulaire d'origine, en réponse à la modification de la configuration spatiale des liaisons de communication radio de ladite station de base, pour assurer une continuité avec le paramètre d'identification dudit secteur angulaire d'origine.

14. Procédé d'allocation dynamique de bandes de fréquence selon l'une des revendications 12 ou 13, **caractérisé en ce qu'**il comporte une étape d'établissement d'une liaison de transport de données de type backhaul entre la station de base et une station de base d'une autre structure mobile par l'intermédiaire d'un équipement utilisateur dédié de ladite autre structure mobile comprenant des ressources matérielles et des ressources logicielles propres.

15. Procédé d'allocation dynamique de bandes de fréquence selon l'une quelconque des revendications 12 à 14, **caractérisé en ce qu'**il comporte une étape d'établissement d'une liaison de transport de données de type backhaul entre la station de base et une station de base d'une autre structure mobile par l'intermédiaire d'un un terminal virtuel comprenant des ressources logicielles mise en oeuvre dans une station de base de ladite autre structure mobile.

## Patentansprüche

1. Basisstation (102) für eine mobile Struktur (101) eines mobilen Funkkommunikationssystems mit Multisektor-Antennensystem, wobei die Basisstation umfasst:
- mindestens eine erste Antenne (105) und eine zweite Antenne zum Senden/Empfangen von Hochfrequenzsignalen, die das Multisektor-Antennensystem (201) bilden und dazu geeignet sind, jeweils mindestens einen ersten Winkelsektor und einen zweiten Winkelsektor abzudecken, wobei die Basisstation Funkkommunikationsverbindungen herstellen kann, die zellulare Funkkommunikationsverbindungen mit Mobilkommunikationsendgeräten (107) der mobilen Struktur (101) und/oder Backhaul-Datentransportverbindungen mit dedizierten Benutzereinrichtungen (113) mindestens einer anderen mobilen Struktur (114), die sich in dem ersten Winkelsektor oder dem zweiten Winkelsektor der Basisstation befindet, umfassen, und,
- eine Steuereinheit (104), die dazu konfiguriert, als Reaktion auf eine Änderung der räumlichen Konfiguration der Funkkommunikationsverbindungen der Basisstation mindestens ein von mindestens einer Antenne der Basisstation verwendetes Frequenzband dynamisch zu ändern.

2. Basisstation nach Anspruch 1, wobei das Ändern der räumlichen Konfiguration der Funkkommunikationsverbindungen der Basisstation ein jeweiliges Ändern der Verteilung der Mobilkommunikationsendgeräte und/oder der dedizierten Benutzereinrichtungen der anderen mobilen Struktur, mit denen die Basisstation zellulare Kommunikationsverbindungen oder Backhaul-Datenübertragungsverbindungen hergestellt hat, zwischen dem ersten und dem zweiten Winkelsektor des Antennensystems der Basisstation umfasst und/oder ein Ändern der Zuteilung der Menge der für die Funkkommunikationsverbindungen der Basisstation erforderlichen Funkressourcen zwischen dem ersten und dem zweiten Winkelsektor umfasst.

3. Basisstation nach einem der vorstehenden Ansprüche, wobei das Ändern eines von einer Antenne der Basisstation verwendeten Frequenzbandes in den folgenden Änderungen enthalten ist:
- Hinzufügen eines weiteren Frequenzbandes oder Entfernen eines Frequenzteilbands;
- Ändern der zentralen Frequenz des Frequenzbandes oder mindestens eines Frequenzteilbands; und
- Ändern der spektralen Breite des Frequenzbandes oder mindestens eines Teilfrequenzbands.

4. Basisstation nach einem der vorstehenden Ansprüche, wobei die Steuereinheit ferner dazu konfiguriert ist, als Reaktion auf das Ändern der räumlichen Konfiguration der Funkkommunikationsverbindungen der Basisstation mindestens einen Identifikationsparameter, der einer Antenne des Antennensystems der Basisstation zugeordnet ist, dynamisch zu ändern.

5. Basisstation nach einem der Ansprüche 1 bis 3, wobei die Steuereinheit ferner dazu konfiguriert ist, als Reaktion auf das Ändern der räumlichen Konfiguration der Funkkommunikationsverbindungen der Basisstation mindestens einen Identifikationsparameter, der einer einen ursprünglichen Winkelsektor abdeckenden Antenne des Antennensystems der Basisstation zugeordnet ist, dynamisch zu ändern, um eine Kontinuität mit dem Identifikationsparameter des ursprünglichen Winkelsektors sicherzustellen.

6. Basisstation nach Anspruch 4 oder 5, wobei der einer Antenne eines Antennensystems einer Basisstation zugeordnete Identifikationsparameter ein Parameter der Art Cell-ID oder PLMNid gemäß ihrer Definition im LTE-Standard ist.

7. Basisstation nach einem der vorstehenden Ansprüche, wobei die Steuereinheit ferner dazu konfiguriert ist, im Falle einer zellularen Übergabe oder eines *Handovers,* zwischen einem ersten Winkelsektor (207) und einem zweiten Winkelsektor (206) nach einer zu der Änderung der räumlichen Konfiguration führenden Bewegung des Antennensystems das durch die den zweiten Winkelsektor (206) abdeckenden Antenne verwendete Frequenzband zu ändern, damit dieses mit dem zuvor durch die den ersten Winkelsektor (207) abdeckende Antenne verwendeten Frequenzband übereinstimmt.

8. Basisstation nach einem der vorstehenden Ansprüche, wobei das dedizierte Benutzergerät einer anderen mobilen Struktur ein Verbindungsendgerät ist, das eigene Hardwareressourcen und Softwareressourcen umfasst, die dazu geeignet sind, ein Herstellen einer Backhaul-Datenübertragungsverbindung zwischen der Basisstation und einer Basisstation der anderen mobilen Struktur zu ermöglichen.

9. Basisstation nach einem der vorstehenden Ansprüche, wobei das dedizierte Benutzergerät einer anderen mobilen Struktur ein virtuelles Endgerät ist, das in einer Basisstation der anderen mobilen Struktur implementierte Softwareressourcen sowie Hardwareressourcen der Basisstation der anderen mobilen Struktur umfasst, das dazu geeignet ist, das Herstellen einer Backhaul-Datenübertragungsverbindung zwischen der Basisstation und der Basisstation der anderen mobilen Struktur zu ermöglichen.

10. Basisstation nach einem der vorstehenden Ansprüche, wobei das eine oder die mehreren von den Sende-/Empfangsantennen des Antennensystems der Basisstation verwendeten Frequenzbänder in einem standardisierten Frequenzspektrum des mobilen Funkkommunikationssystems, zum Beispiel ein standardisiertes Frequenzspektrum gemäß dem LTE-Standard des 3GPP-Konsortiums, enthalten sind.

11. Basisstation nach einem der vorstehenden Ansprüche, wobei die Basisstation eine erweiterte Basisstation ist, die ferner einen lokalen ePC-Netzkern für ein Mobilkommunikationssystem gemäß den LTE-Technologien umfasst.

12. Verfahren zum dynamischen Zuweisen von Frequenzbändern, wobei das Verfahren die folgenden Schritte umfasst, die von einer Steuereinheit einer Basisstation nach einem der vorstehenden Ansprüche ausgeführt werden:
- Empfangen (301) einer Information, die eine Änderung der räumlichen Konfiguration der Funkkommunikationsverbindungen der Basisstation anzeigt; und
- Ändern (302) mindestens eines von einer Antenne der Basisstation verwendeten Frequenzbandes basierend auf der empfangenen Information.

13. Verfahren zum dynamischen Zuweisen von Frequenzbändern nach Anspruch 12, **dadurch gekennzeichnet, dass** die Steuereinheit als Reaktion auf das Ändern der räumlichen Konfiguration der Funkkommunikationsverbindungen der Basisstation mindestens einen Identifikationsparameter, der einer den ursprünglichen Winkelsektor abdeckenden Antenne des Antennensystems der Basisstation zugeordnet ist, dynamisch zu ändern, um eine Kontinuität mit dem Identifikationsparameter des ursprünglichen Winkelsektors sicherzustellen.

14. Verfahren zum dynamischen Zuweisen von Frequenzbändern nach einem der Ansprüche 12 oder 13, **dadurch gekennzeichnet, dass** es einen Schritt des Herstellens einer Backhaul-Datenübertragungsverbindung zwischen der Basisstation und einer Basisstation einer anderen mobilen Struktur über ein dediziertes Benutzergerät der anderen mobilen Struktur, das eigene Hardwareressourcen und Softwareressourcen umfasst, umfasst.

15. Verfahren zum dynamischen Zuweisen von Frequenzbändern nach einem der Ansprüche 12 bis 14, **dadurch gekennzeichnet, dass** es einen Schritt des Herstellens einer Backhaul-Datenübertragungsverbindung zwischen der Basisstation und einer Basisstation einer anderen mobilen Struktur über ein virtuelles Endgerät, das in einer Basisstation der anderen mobilen Struktur implementierte Softwareressourcen umfasst, umfasst.

## Claims

1. Base station (102) for a mobile structure (101) of a mobile radio communication system with a multi-sector antenna system, said base station comprising:
- at least a first antenna (105) and a second antenna for transmitting/receiving radio frequency signals, which antennas form said multi-sector antenna system (201), adapted to cover at least a first angular sector and a second angular sector, respectively, in which antennas the base station can establish radio communication links comprising cellular communication links with mobile communication terminals (107) of the mobile structure (101) and/or backhaul type data transport links with dedicated user equipment (113) of at least one other mobile structure (114), located in the first angular sector or in the second angular sector of said base station, and
- a control entity (104) configured to dynamically modify at least one frequency band used by at least one antenna of the base station in response to a modification of the spatial configuration of the radio communication links of said base station.

2. Base station according to claim 1, wherein the modification of the spatial configuration of the radio communication links of the base station comprises modifying the distribution, between the first and second angular sectors of the antenna system of said base station, of the mobile communication terminals and/or the dedicated user equipment of the other mobile structure with which the base station has established cellular communications links or backhaul type data transport links, respectively, and/or comprises modifying the allocation, between the first and second angular sectors, of the quantity of the radio resources required for the radio communication links of the base station.

3. Base station according to either one of the preceding claims, wherein the modification of a frequency band used by an antenna of the base station is comprised in the following modifications:
- adding another frequency band or subtracting a frequency sub-band;
- modifying the center frequency of the frequency band or of at least one frequency sub-band; and
- modifying the spectral width of the frequency band or of at least one frequency sub-band.

4. Base station according to any one of the preceding claims, wherein the control entity is further configured to dynamically modify at least one identification parameter associated with an antenna of the antenna system of the base station, in response to the modification of the spatial configuration of the radio communication links of said base station.

5. Base station according to any one of claims 1 to 3, wherein the control entity is further configured to dynamically modify at least one identification parameter associated with an antenna of the antenna system of the base station covering an original angular sector, in response to the modification of the spatial configuration of the radio communication links of said base station, in order to ensure continuity with the identification parameter of said original angular sector.

6. Base station according to either claim 4 or claim 5, wherein the identification parameter associated with an antenna of an antenna system of a base station is a Cell-ID or PLMNid type parameter as defined according to the LTE standard.

7. Base station according to any one of the preceding claims, wherein the control entity is further configured to, in case of handover between a first angular sector (207) and a second angular sector (206) following a movement of the antenna system that causes the modification of spatial configuration, modify the frequency band used by the antenna covering the second angular sector (206) so that it is identical to the frequency band previously used by the antenna covering the first angular sector (207).

8. Base station according to any one of the preceding claims, wherein the dedicated user equipment of another mobile structure is a link terminal, comprising specific hardware resources and software resources, adapted to allow establishment of a backhaul type data transport link between the base station and a base station of said other mobile structure.

9. Base station according to any one of the preceding claims, wherein the dedicated user equipment of another mobile structure is a virtual terminal comprising software resources implemented in a base station of said other mobile structure, as well as hardware resources of said base station of the other mobile structure, adapted to allow establishment of a backhaul type data transport link between the base station and said base station of the other mobile structure.

10. Base station according to any one of the preceding claims, wherein the frequency band(s) used by the transmit/receive antennas of the antenna system of the base station are included in a normalized frequency spectrum of the mobile radio communication system, for example a normalized frequency spectrum according to the LTE standard of the 3GPP consortium.

11. Base station according to any one of the preceding claims, wherein the base station is an enhanced base station that further comprises a local ePC network core for a mobile radio communication system according to LTE technologies.

12. Method for dynamic allocation of frequency bands, said method comprising the following steps, executed by a control entity of a base station according to any one of the preceding claims:
- receiving (301) information indicating a modification of the spatial configuration of the radio communications links of the base station; and,
- modifying (302), on the basis of the received information, at least one frequency band used by at least one antenna of the base station.

13. Method for dynamic allocation of frequency bands according to claim 12, **characterized in that** the control entity dynamically modifies at least one identification parameter associated with an antenna of the antenna system of the base station covering an original angular sector, in response to the modification of the spatial configuration of the radio communication links of said base station, in order to ensure continuity with the identification parameter of said original angular sector.

14. Method for dynamic allocation of frequency bands according to either claim 12 or claim 13, **characterized in that** it includes a step of establishing a backhaul type data transport link between the base station and a base station of another mobile structure via a piece of dedicated user equipment of said other mobile structure that comprises specific hardware resources and software resources.

15. Method for dynamic allocation of frequency bands according to any one of claims 12 to 14, **characterized in that** it includes a step of establishing a backhaul type data transport link between the base station and a base station of another mobile structure via a virtual terminal comprising software resources implemented in a base station of said other mobile structure.
